# EUROPÄISCHE PATENTSCHRIFT

(11) **EP 1 702 782 B1**
(45) Veröffentlichungstag und Bekanntmachung des Hinweises auf die Patenterteilung: **17.09.2008**
(21) Anmeldenummer: 06100085.7
(22) Anmeldetag: 04.01.2006
(51) Int. Cl.: B60K 6/20, B60K 28/10

(54) **Verfahren zum Blockieren der Bedienung eines elektrischen Antriebssystems eines Fahrzeugs bei einer Inbetriebnahme**
Method for blocking the starting of an electric drive system
Procédé pour bloquer la mise en service d'un entraînement électrique

(30) Priorität: 04.01.2005 US 29237
(43) Veröffentlichungstag der Anmeldung: 20.09.2006
(73) Patentinhaber: Deere & Company, Moline, IL 61265-8098 (US)
(72) Erfinder: Seksaria, Arun Kumar, 50613, Cedar Falls CO (US); Kizlyk, Mervin Peter, 50613, Cedar Falls IA (US); Kasten, Robert Eugene, 80247, Denver CO (US)
(74) Vertreter: Magin, Ludwig Bernhard

(56) Entgegenhaltungen:
- DE-A1- 19 729 354
- US-B1- 6 492 785

## Beschreibung

Die Erfindung betrifft ein Verfahren zum Blockieren eines elektrischen Antriebssystems eines Fahrzeugs.

Elektrische Antriebssysteme für Fahrzeuge wurden vorgeschlagen, um Nachteile von mechanischen Getriebesystemen zu überwinden, insbesondere die einer begrenzten Anzahl von Gängen, erhöhte Kosten für die Entwicklung und für die Herstellung von Komponenten sowie eine Begrenzung von Fahrzeugkonfigurationsoptionen. Lediglich beispielhaft wird auf ein hybrides elektrisches Antriebssystem für ein Fahrzeug hingewiesen, welches aus der US 6,492,785 bekannt ist. Dieses hybride elektrische Antriebssystem umfasst einen von einem Verbrennungsmotor angetriebenen Generator und Elektromotoren zum Antreiben von Rädern oder Raupen sowie zum Antreiben von Hilfsaggregaten, wie beispielsweise eine Zapfwelle oder einen Lüfterantrieb.

Dieses elektrische Antriebssystem weist weiterhin ein Pedal zur Geschwindigkeitssteuerung des Fahrzeugs und ein Richtungseingabehebel auf, welcher eine Vorwärts-, Neutral- und Rückwärts-Position aufweist. Mit diesen Eingabeeinheiten kann ein Bediener einen von mehreren Betriebsmodi auswählen, wobei ein Modus vorgesehen ist, in welchem eine Fahrzeugbewegung dadurch eingeleitet werden kann, indem der Fahrtrichtungshebel in die Vorwärts- oder Rückwärtsposition verbracht wird und indem das Pedal in eine Position verbracht wird, welche sich von einer Null-Geschwindigkeitsposition unterscheidet. In diesem Bedienmodus kann der Bediener schnell die Fahrtrichtung umkehren, indem er einfach den Richtungseingabehebel in die entgegengesetzte Richtung bewegt. Dies ist beispielsweise bei Anwendungen hilfreich, bei welchen ein Lader zu bedienen ist. Hierbei ist es wünschenswert, die Fahrtrichtung schnell und oft zu wechseln.

DE 197 29 354 A1 offenbart ein Verfahren, bei welchem lediglich die Signale der Richtungseingabeeinheit und der Geschwindigkeitseingabeeinheit berücksichtigt werden, um die Bedienung eines Antriebssystems bei einer Inbetriebnahme zu unterdrücken.

Sowohl konventionelle Traktoren als auch Traktoren mit stufenlosen Getrieben (IVT-Getrieben, IVT = Infinitely-Variable-Transmission) verwenden Blockiersysteme, um ein Bediener davor zu schützen, den Traktor versehentlich in einem unsicheren Betriebszustand zu starten. So wird beispielsweise bei solchen Traktoren detektiert, ob ein Gang eingelegt ist oder ob ein Getrieberad eingerückt ist und es wird der Start des Verbrennungsmotors verhindert, falls das Getriebe entsprechend eingerückt ist. Ein solches Blockiersystem kann nicht in Verbindung mit einem hybriden elektrischen Fahrzeug verwendet werden, da in einem solchen Fahrzeug kein Getriebe mit einem eingelegten Gang vorhanden ist.

Der vorliegenden Erfindung liegt daher die Aufgabe zugrunde, ein Verfahren der eingangs genannten Art anzugeben und weiterzubilden, durch welches die vorgenannten Probleme überwunden werden. Insbesondere soll ein hybrides elektrisches Antriebssystem für ein Fahrzeug angegeben und weitergebildet werden, welches eine Blockierfunktion bzw. -funktionalität aufweist, die einen Bediener von einer versehentlichen Bedienung des Fahrzeugs beim Starten des Fahrzeugs schützen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Verfahren der eingangs genannten Art dient zum Blockieren der Bedienung eines elektrischen Antriebssystems eines Fahrzeugs bei einer Inbetriebnahme. Das elektrische Antriebssystem umfasst einen Verbrennungsmotor, eine als Generator betreibbare elektrische Maschine, einen ersten Wechselrichter/Gleichrichter, einen Bus, einen zweiten Wechselrichter/Gleichrichter, einen Antriebsmotor, eine Geschwindigkeitseingabeeinheit, eine Richtungseingabeeinheit und eine Steuereinheit. Die elektrische Maschine ist von dem Verbrennungsmotor antreibbar. Der erste Wechselrichter/Gleichrichter ist mit der elektrischen Maschine gekoppelt. Der Bus ist mit dem ersten und dem zweiten Wechselrichter/Gleichrichter gekoppelt. Der Antriebsmotor ist mit dem zweiten Wechselrichter/Gleichrichter gekoppelt und treibt mindestens ein Rad an. Die Geschwindigkeitseingabeeinheit ist von einer minimalen Geschwindigkeitsposition zu einer maximalen oder hohen Geschwindigkeitsposition bewegbar. Die Richtungseingabeeinheit umfasst eine Vorwärts-, eine Neutral- und eine Rückwärts-Position (FNR). Die Steuereinheit ist mit dem zweiten Wechselrichter/Gleichrichter gekoppelt, um den Ausgangsstrom des zweiten Wechselrichters/Gleichrichters in Abhängigkeit der Positionen der Geschwindigkeits- und Richtungseingabeeinheiten anzusteuern. Das Verfahren ist durch die folgenden Verfahrensschritte gekennzeichnet:
- bei Inbetriebnahme werden die Positionen der Richtungseingabeeinheit, der Radgeschwindigkeit und der Geschwindigkeitseingabeeinheit detektiert;
- falls die Richtungseingabeeinheit sich nicht in ihrer Neutralposition befindet oder falls die detektierte Radgeschwindigkeit nicht den Wert 0 oder keinen Wert von ungefähr 0 aufweist oder falls die Geschwindigkeitseingabeeinheit sich nicht in ihrer minimalen Geschwindigkeitsposition befindet, wird eine Fahrzeugbedienung verhindert; und
- falls die Richtungseingabeeinheit sich in der Neutralposition befindet und die detektierte Radgeschwindigkeit den Wert 0 oder nahezu den Wert 0 aufweist und falls die Geschwindigkeitseingabeeinheit sich nahezu in der minimalen Geschwindigkeitsposition befindet, wird eine Fahrzeugbedienung erlaubt.

Unter dem Begriff Blockieren im Sinne der vorliegenden Erfindung ist insbesondere eine Deaktivierung beziehungsweise ein Unterdrücken von Steuersignalen bzw. im Ergebnis ein Sperren oder Verriegeln von Fahrzeugfunktionen zu verstehen.

Ganz besonders bevorzugt weist das elektrische Antriebssystem ein Pedal zur Geschwindigkeitseingabe auf, welches von einer minimalen Geschwindigkeitsposition zu einer maximalen oder hohen Geschwindigkeitsposition bewegbar ist. Die Steuereinheit ist mit dem zweiten Wechselrichter/Gleichrichter gekoppelt, um den Ausgangsstrom des zweiten Wechselrichters/Gleichrichters in Abhängigkeit der Positionen der Geschwindigkeits-, Richtungseingabeeinheiten und des Pedals anzusteuern. Das Verfahren weist die zusätzlichen Verfahrensschritte auf:
- bei Inbetriebnahme wird die Position des Pedals detektiert,
- falls das Pedal sich nicht in einer Position befindet, welche einer Geschwindigkeit von 0 (d.h. einer minimalen Geschwindigkeitsposition entsprechend) oder ungefähr von 0 entspricht, wird eine Fahrzeugbedienung verhindert und
- falls das Pedal sich in einer Position befindet, welche einer Geschwindigkeit von 0 oder ungefähr von 0 entspricht, wird eine Fahrzeugbedienung erlaubt.

Die hier erwähnten Bedingungen zum Verhindern bzw. Erlauben einer Fahrzeugbedienung sind insbesondere auch als zusätzliche Bedingungen für die entsprechenden gemäß Patentanspruch 1 genannten Bedingungen zum Verhindern bzw. Erlauben einer Fahrzeugbedienung aufzufassen. Demgemäß wird eine Fahrzeugbedienung verhindert, falls die Richtungseingabeeinheit sich nicht in ihrer Neutralposition befindet oder falls die detektierte Radgeschwindigkeit nicht den Wert 0 oder einen Wert von ungefähr 0 aufweist oder falls die Geschwindigkeitseingabeeinheit sich nicht in ihrer minimalen Geschwindigkeitsposition befindet oder falls das Pedal sich nicht in einer Position befindet, welche einer Geschwindigkeit von 0 oder ungefähr von 0 entspricht. Eine Fahrzeugbedienung wird erlaubt, falls die Richtungseingabeeinheit sich in der Neutralposition befindet und die detektierte Radgeschwindigkeit den Wert 0 oder nahezu den Wert 0 aufweist und falls die Geschwindigkeitseingabeeinheit nahezu sich in der minimalen Geschwindigkeitsposition befindet und falls das Pedal sich in einer Position befindet, welche einer Geschwindigkeit von 0 oder ungefähr von 0 entspricht.

Die Geschwindigkeitseingabeeinheit könnte einen Bedienhebel aufweisen. Der Antriebsmotor könnte einen Elektromotor aufweisen, insbesondere einen Drehstrom-Elektromotor. Ganz besonders bevorzugt ist bzw. sind die elektrische Maschine und/oder der Antriebsmotor als Generator oder als Motor betreibbar.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein erfindungsgemäßes Ausführungsbeispiel eines elektrischen Antriebssystems für ein Fahrzeug und
- Fig. 2: ein Ablaufdiagramm eines Algorithmus, welcher von einer Fahrzeug-Steuereinheit des Antriebssystems aus Fig. 1 ausgeführt wird.

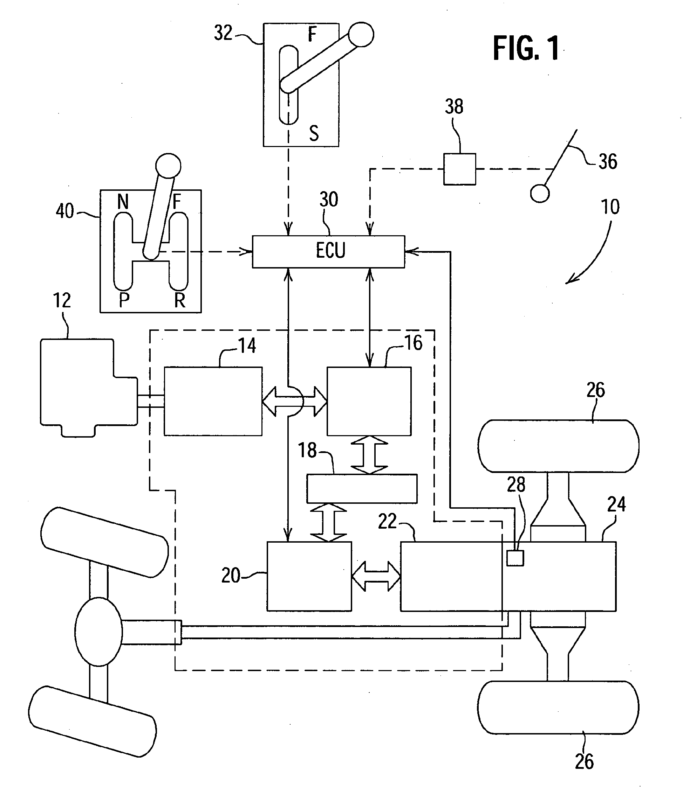

Fig. 1 zeigt ein elektrisches Antriebssystem 10 für ein Fahrzeug, welches einen Verbrennungsmotor 12 aufweist, welcher insbesondere in Form eines Dieselmotors ausgebildet ist. Der Verbrennungsmotor 12 treibt einen elektrischen Generator 14 an, welcher einen Wechselrichter/Gleichrichter 16 mit elektrischer Leistung versorgt. Der Wechselrichter/Gleichrichter 16 versorgt einen Hochspannungs-Gleichstrom-Bus 18 mit elektrischer Leistung. Der Hochspannungs-Gleichstrom-Bus 18 kann einen Zwischenstromkreis oder einen Gleichstromkreis aufweisen (DC-Bus). Der Hochspannungs-Gleichstrom-Bus 18 versorgt den Wechselrichter/Gleichrichter 20 mit elektrischer Leistung. Der Wechselrichter/Gleichrichter 20 versorgt den Motor 22 mit elektrischer Leistung, wobei der Motor 22 die Hinterräder 26 über eine Drehzahlveränderungseinheit 24 antreibt. Die Drehzahlveränderungseinheit 24 dient hauptsächlich zur Drehzahlverringerung und weist einen Drehzahlsensor 28 auf, welcher ein Fahrzeuggeschwindigkeitssignal der elektronischen Steuereinheit 30 (ECU = Electrical Control Unit) des Fahrzeugs bereitstellt. Jeder Wechselrichter/Gleichrichter 16, 20 wird von der elektronischen Steuereinheit 30 gesteuert bzw. geregelt.

Der Generator 14 ist bevorzugt ein Drehstromgenerator, welcher im Generatoren- oder im Motorenbetrieb betreibbar ist. Der Wechselrichter/Gleichrichter 16 kann in Form eines bidirektionalen Umrichters ausgebildet sein, welcher Wechselstrom in Gleichstrom wandelt und umgekehrt (je nachdem, wie er angesteuert wird). Der Motor 22 ist bevorzugt ein Drehstrom-Elektromotor, welcher im Generatoren- oder im Motorenbetrieb betreibbar ist (je nachdem, wie er angesteuert wird). Auch der Wechselrichter/Gleichrichter 20 kann in Form eines bidirektionalen Umrichters ausgebildet sein.

Ein Geschwindigkeitseingabehebel 32 ist mit der Steuereinheit 30 verbunden. Ein Pedal 36 zum bedienergesteuerten Eingeben der Fahrzeuggeschwindigkeit ist mit der Steuereinheit 30 verbunden. Mit dem Sensor 38 wird die aktuelle Position des Pedal 36 detektiert. Der Geschwindigkeitseingabehebel 32 und das Pedal 36 können von einem Bediener verwendete werden, um eine gewünschte Fahrzeuggeschwindigkeit einzustellen, wobei die Geschwindigkeit in einem Bereich zwischen 0 und 50 km/h liegen kann. Eine Richtungseingabeeinheit 40, welche eine Vorwärts-Neutral-Rückwärts-Stellung aufweist (FRN) ist mit der Steuereinheit 30 verbunden. Ein entsprechender Hebel, Pedal und Richtungseingabeeinheit sind beispielsweise aus der derzeitigen Serienproduktion von John Deere Traktoren der Serie 7820 und 7720 mit stufenlosem Getriebe (IVT) bekannt. Die Einheiten 32, 36 und 40 weisen entsprechende Wandler bzw. Signalgeber auf (nicht gezeigt), welche die Steuereinheit 30 mit Signalen versorgt, welche den Positionen der entsprechenden Eingabeeinheiten entsprechen.

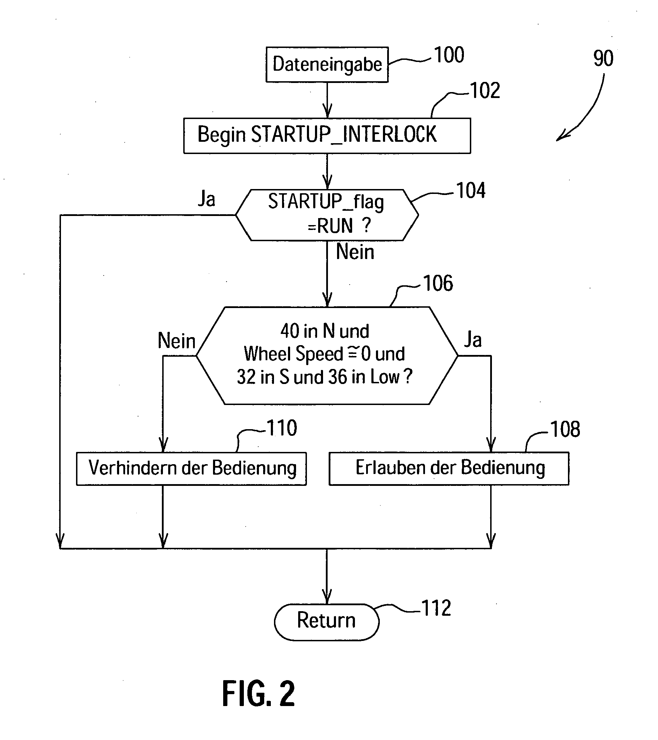

Bei der Inbetriebnahme des Antriebssystems führt die Steuereinheit 30 ein Sperrungs-, Blockierungs-, Unterdrückungs- und/oder Verriegelungsprogramm beziehungsweise einen Algorithmus 90 aus, welcher in Fig. 2 schematisch gezeigt ist. Der Algorithmus 90 beginnt mit dem Schritt 102, welcher ausgeführt wird, falls ein Hauptprogramm (nicht gezeigt) den Algorithmus 90 aufruft. Mit dem Schritt 102 wird die STARTUP-flag zum STARTUP initialisiert. Weiterhin werden jeweils ein Radgeschwindigkeitssignal von dem Radgeschwindigkeitssensor 28, ein Geschwindigkeitskommandosignal von dem Geschwindigkeitseingabehebel 32, ein Geschwindigkeitskommandosignal von dem Pedal 36 und ein Richtungssignal von der Richtungseingabeeinheit 40 empfangen, wie das mit 100, Dateneingabe, angedeutet ist.

Mit dem Schritt 104 ruft der Algorithmus 90 den Schritt 112 auf, falls das STARTUP-flag den Wert RUN aufweist, ansonsten wird Schritt 106 ausgeführt. Mit dem Schritt 112 ist der Algorithmus 90 beendet.

Mit dem Schritt 106 ruft der Algorithmus den Schritt 108 auf, falls die Richtungseingabeeinheit 40 sich in der Neutralposition befindet, falls die von dem Sensor 28 detektierte Radgeschwindigkeit ungefähr den Wert 0 aufweist, falls der Geschwindigkeitseingabehebel 32 in oder nahe seiner minimalen Geschwindigkeitsposition sich befindet und falls das Pedal 36 in oder nahe seiner minimalen Geschwindigkeitsposition sich befindet. Wenn eine dieser Bedingungen nicht erfüllt ist, wird von dem Schritt 106 der Schritt 110 ausgeführt.

Der Schritt 108 ermöglicht beziehungsweise erlaubt eine normalen Fahrzeugbedienung (indem verschiedene Bits, Variablen und/oder Parameter gesetzt werden, nicht gezeigt), so dass das Fahrzeug vorwärts oder rückwärts bewegt werden kann, als Reaktion auf die Bedienung der Eingabeeinheiten 32, 36 und 40.

Somit muss die Fahrzeuggeschwindigkeit und die angegebene Geschwindigkeit einen Wert von 0 oder nahezu 0 aufweisen, falls die Richtungseingabeeinheit 40 anfänglich aus der Neutralposition bewegt wird, bevor die Antriebsräder mit Antriebsleistung beaufschlagt werden. Hierdurch werden plötzliche und unerwartete Fahrzeugbeschleunigungen bei einem anfänglichen Starten des Fahrzeugs zumindest weitgehend verhindert.

Der Schritt 110 setzt verschiedene Bits, Variablen und/oder Parameter (nicht gezeigt), so dass eine normalen Bedienung des Fahrzeugs verhindert wird. Das Fahrzeug bewegt sich nicht vorwärts oder rückwärts in Reaktion der Bedienung der Eingabeeinheiten 32, 36 und 40.

Der Schritt 112 beendet die Unterroutine des Algorithmus 90 und übergibt die Steuerung zu einem Hauptsteueralgorithmus (in den Fig. nicht gezeigt).

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Verfahren zum Blockieren der Bedienung eines elektrischen Antriebssystems (10) eines Fahrzeugs bei einer Inbetriebnahme, wobei das elektrische Antriebssystem (10) einen Verbrennungsmotor (12), eine als Generator betreibbare elektrische Maschine (14), einen ersten Wechselrichter/Gleichrichter (16), einen Bus (18), einen zweiten Wechselrichter/Gleichrichter (20), einen Antriebsmotor (22), eine Geschwindigkeitseingabeeinheit (32), eine Richtungseingabeeinheit (40) und eine Steuereinheit (30) aufweist, wobei die elektrische Maschine (14) von dem Verbrennungsmotor (12) antreibbar ist, wobei der erste Wechselrichter/Gleichrichter (16) mit der elektrischen Maschine (14) gekoppelt ist, wobei der Bus (18) mit dem ersten und dem zweiten Wechselrichter/Gleichrichter (16, 20) gekoppelt ist, wobei der Antriebsmotor (22) mit dem zweiten Wechselrichter/Gleichrichter (20) gekoppelt ist und mindestens ein Rad (26) antreibt, wobei die Geschwindigkeitseingabeeinheit (32) von einer minimalen Geschwindigkeitsposition (S) zu einer maximalen Geschwindigkeitsposition (F) bewegbar ist, wobei die Richtungseingabeeinheit (40) eine Vorwärts-, eine Neutral- und eine Rückwärts-Position (FNR) aufweist, und wobei die Steuereinheit (30) mit dem zweiten Wechselrichter/Gleichrichter (20) gekoppelt ist, um den Ausgangsstrom des zweiten Wechselrichters/Gleichrichters (20) in Abhängigkeit der Positionen der Geschwindigkeits- und Richtungseingabeeinheiten (32, 40) anzusteuern, wobei das Verfahren durch die folgenden Verfahrensschritte **gekennzeichnet** ist:
- bei Inbetriebnahme werden die Radgeschwindigkeit und die Positionen der Richtungseingabeeinheit (40) und der Geschwindigkeitseingabeeinheit (32) detektiert,
- falls die Richtungseingabeeinheit (40) sich nicht in ihrer Neutralposition befindet oder falls die detektierte Radgeschwindigkeit nicht den Wert 0 oder keinen Wert von ungefähr 0 aufweist oder falls die Geschwindigkeitseingabeeinheit (32) sich nicht in ihrer minimalen Geschwindigkeitsposition befindet, wird eine Fahrzeugbedienung verhindert und
- falls die Richtungseingabeeinheit (40) sich in der Neutralposition befindet und die detektierte Radgeschwindigkeit den Wert 0 oder nahezu den Wert 0 aufweist und falls die Geschwindigkeitseingabeeinheit (32) nahezu sich in der minimalen Geschwindigkeitsposition befindet, wird eine Fahrzeugbedienung erlaubt.

2. Verfahren nach Anspruch 1, **dadurch gekennzeichnet, dass** das elektrische Antriebssystem (10) ein Pedal (36) zur Geschwindigkeitseingabe aufweist, welches von einer minimalen Geschwindigkeitsposition zu einer maximalen Geschwindigkeitsposition bewegbar ist und wobei die Steuereinheit (30) mit dem zweiten Wechselrichter/Gleichrichter (20) gekoppelt ist, um den Ausgangsstrom des zweiten Wechselrichters/Gleichrichters (20) in Abhängigkeit der Positionen der Geschwindigkeits-, Richtungseingabeeinheiten (32, 40) und des Pedals (36) anzusteuern, wobei das Verfahren die zusätzlichen Verfahrensschritte aufweist:
- bei Inbetriebnahme wird die Positionen des Pedals (32) detektiert,
- falls das Pedal (36) sich nicht in einer Position befindet, welche einer Geschwindigkeit von 0 oder ungefähr von 0 entspricht, wird eine Fahrzeugbedienung verhindert und
- falls das Pedal (36) sich in einer Position befindet, welche einer Geschwindigkeit von 0 oder ungefähr von 0 entspricht, wird eine Fahrzeugbedienung erlaubt.

3. Verfahren nach Anspruch 1 oder 2, **gekennzeichnet, durch** die Verwendung eines Bedienhebels als Geschwindigkeitseingabeeinheit (32).

4. Verfahren nach einem der Ansprüche 1 bis 3, **gekennzeichnet durch** die Verwendung eines Elektromotors insbesondere eines Drehstrom-Elektromotors, als Antriebsmotor (22).

5. Verfahren nach einem der Ansprüche 1 bis 4, **dadurch gekennzeichnet, dass** die elektrische Maschine (14) und/oder der Antriebsmotor (22) als Generator oder als Motor betreibbar ist bzw. sind.

## Claims

1. Method for blocking the operation of an electrical drive system (10) of a vehicle during setting up, with the electrical drive system (10) having an internal combustion engine (12), an electrical machine (14) which can be operated as a generator, a first inverter/rectifier (16), a bus (18), a second inverter/rectifier (20), a drive motor (22), a speed input unit (32), a direction input unit (40), and a control unit (30), wherein the electrical machine (14) can be driven by the internal combustion engine (12), wherein the first inverter/rectifier (16) is coupled to the electrical machine (14), wherein the bus (18) is coupled to the first and to the second inverter/rectifier (16, 20), wherein the drive motor (22) is coupled to the second inverter/rectifier (20) and drives at least one wheel (26), wherein the speed input unit (32) can be moved from a minimum speed position (S) to a maximum speed position (F), wherein the direction input unit (40) has a forward, a neutral and a reverse position (FNR), and wherein the control unit (30) is coupled to the second inverter/rectifier (20) in order to control the output current of the second inverter/rectifier (20) as a function of the positions of the speed and direction input units (32, 40), wherein the method is **characterized by** the following method steps:
- whilst setting up, the wheel speed and the positions of the direction input unit (40) and of the speed input unit (32) are detected,
- if the direction input unit (40) is not in its neutral position or if the detected wheel speed does not have the value zero or does not have a value of approximately zero, or if the speed input unit (32) is not located in its minimum speed position, vehicle operation is inhibited, and
- if the direction input unit (40) is in the neutral position and the detected wheel speed has the value zero or virtually the value zero, and if the speed input unit (32) is located virtually in the minimum speed position, vehicle operation is permitted.

2. Method according to Claim 1, **characterized in that** the electrical drive system (10) has a pedal (36) for the speed input, which pedal (36) can be moved from a minimum speed position to a maximum speed position, and wherein the control unit (30) is coupled to the second inverter/rectifier (20) in order to control the output current of the second inverter/rectifier (20) as a function of the positions of the speed and direction input units (32, 40) and of the pedal (36), wherein the method has the following additional method steps:
- during setting up, the positions of the pedal (32) are detected,
- if the pedal (36) is not in a position which corresponds to a speed of zero or approximately of zero, vehicle operation is inhibited, and
- if the pedal (36) is located in a position which corresponds to a speed of zero or approximately of zero, vehicle operation is permitted.

3. Method according to Claim 1 or 2, **characterized by** the use of a control lever as the speed input unit (32).

4. Method according to one of Claims 1 to 3, **characterized by** the use of an electric motor, in particular of a three-phase electric motor, as the drive motor (22).

5. Method according to one of Claims 1 to 4, **characterized in that** the electrical machine (14) and/or the drive motor (22) can be operated as a generator or as a motor.

## Revendications

1. Procédé destiné à bloquer la manoeuvre d'un système d'entraînement électrique (10) d'un véhicule au moment d'un démarrage, le système d'entraînement électrique (10) comportant un moteur à combustion interne (12), un moteur électrique (14) pouvant être exploité comme génératrice, un premier onduleur/redresseur (16), un bus (18), un deuxième onduleur/redresseur (20), un moteur d'entraînement (22), une unité d'entrée de vitesse (32), une unité d'entrée de direction (40) et une unité de commande (30), le moteur électrique (14) pouvant être actionné par le moteur à combustion interne (12), le premier onduleur/redresseur (16) étant couplé au moteur électrique (14), le bus (18) étant couplé au premier et au deuxième onduleur/redresseur (16, 20), le moteur d'entraînement (22) étant couplé au deuxième onduleur/redresseur (20) et actionnant au moins une roue (26), l'unité d'entrée de vitesse (32) pouvant être déplacée depuis une position de vitesse minimale (S) vers une position de vitesse maximale (F), l'unité d'entrée de direction (40) comportant une position de marche avant, une position neutre et une position de marche arrière (FNR) et l'unité de commande (30) étant couplée au deuxième onduleur/redresseur (20) afin de commander le flux de sortie du deuxième onduleur/redresseur (20) en fonction des positions des unités d'entrée de vitesse et de direction (32, 40), le procédé étant **caractérisé par** les étapes suivantes :
- au moment du démarrage sont détectées la vitesse des roues et les positions de l'unité d'entrée de direction (40) et de l'unité d'entrée de vitesse (32),
- une manoeuvre du véhicule est empêchée si l'unité d'entrée de direction (40) n'est pas dans sa position neutre ou si la vitesse des roues détectée n'est pas égale à la valeur 0 ou à une valeur d'environ 0, ou si l'unité d'entrée de vitesse (32) ne se situe pas dans sa position de vitesse minimale, et
- une manoeuvre du véhicule est autorisée si l'unité d'entrée de direction (40) se situe dans la position neutre et la vitesse des roues détectée est égale à la valeur 0 ou à une valeur d'environ 0 et si l'unité d'entrée de vitesse (32) se situe dans sa position de vitesse minimale.

2. Procédé selon la revendication 1, **caractérisé en ce que** le système d'entraînement électrique (10) comporte une pédale (36) pour entrer la vitesse, laquelle peut être déplacée depuis une position de vitesse minimale vers une position de vitesse maximale, et l'unité de commande (30) étant couplée au deuxième onduleur/redresseur (20) afin de commander le flux de sortie du deuxième onduleur/redresseur (20) en fonction des positions des unités d'entrée de vitesse et de direction (32, 40) et de la pédale (36), le procédé comportant les étapes supplémentaires suivantes :
- au moment du démarrage sont détectées les positions de la pédale (36),
- une manoeuvre du véhicule est empêchée si la pédale (36) ne se situe pas dans une position qui correspond à une vitesse nulle ou à peu près nulle, et
- une manoeuvre du véhicule est autorisée si la pédale (36) se situe dans une position qui correspond à une vitesse nulle ou à peu près nulle.

3. Procédé selon la revendication 1 ou 2, **caractérisé par** l'utilisation d'un levier de commande formant l'unité d'entrée de vitesse (32).

4. Procédé selon l'une quelconque des revendications 1 à 3, **caractérisé par** l'utilisation d'un moteur électrique, en particulier un moteur électrique à courant triphasé, formant un moteur d'entraînement (22).

5. Procédé selon l'une quelconque des revendications 1 à 4, **caractérisé en ce que** le moteur électrique (14) et/ou le moteur d'entraînement (22) peut ou peuvent être exploité(s) en tant que génératrice ou en tant que moteur.
